# EUROPEAN PATENT APPLICATION

(11) **EP 2 325 063 A2**
(43) Date of publication of application: **25.05.2011**
(21) Application number: 10191597.3
(22) Date of filing: 17.11.2010
(51) Int. Cl.: B60W 10/06, B60W 40/06, B60W 10/08, B60W 10/02, B60W 20/00, B60W 40/04, B60K 6/485

(54) **Power transmission mechanism for hybrid vehicle**

(30) Priority: 18.11.2009 JP 2009262841
(71) Applicant: AISIN AI Co., Ltd., Nishio-shi Aichi-ken 445-0006 (JP)
(72) Inventor: Sasaki, Kan, Nishio-shi, Aichi 445-0006 (JP)
(74) Representative: Winter, Brandl, Fürniss, Hübner, Röss, Kaiser, Polte - Partnerschaft

(57) **Abstract**

A power switcher mechanism includes an internal combustion engine, a generator motor, a controller and a power interrupter. The internal combustion engine outputs a power. The generator motor carries out electric power generation as well as outputs a power when a power is input. The controller selects and then controls the internal combustion engine and the generator motor as a driving source for running. The power interrupter connects the generator motor with a power transmission route for transmitting the power and then disconnects the generator motor from the power transmission route, or vice versa, intermittently. The controller activates the power interrupter and then deactivates it, or vice versa, intermittently, with reference to information on road conditions, information on traffic conditions or information on vehicular conditions.

## Description

### INCORPORATION BY REFERENCE

The present invention is based on Japanese Patent Application No. 2009-262,841, filed on November 18, 2009, the entire contents of which are incorporated herein by reference.

### BACKGROUND OF THE INVENTION

### Field of the Invention

The present invention relates to a power transmission mechanism for hybrid vehicle that has an internal combustion engine and an generator motor, which serve as a driving source respectively, on board.

### Description of the Related Art

Hybrid vehicles have come into practical application. Hybrid vehicles have dual driving sources, that is, an internal combustion engine and a generator motor, on board, and are intended to materialize fuel-consumption improvement, high output and environmental protection by making use of advantages of each of the internal combustion engine and generator motor. In such a hybrid vehicle, it is fundamental to selectively control the driving source so that the generator motor drives the hybrid vehicle at the time of starting the hybrid vehicle when the internal combustion engine exhibits poor efficiency and then the driving source is switched from the generator motor to the internal combustion engine at such a stage when the hybrid vehicle has undergone the shift from the starting phase to the running phase where the internal combustion shows better efficiency. Moreover, both of the internal combustion engine and generator motor might possibly drive the hybrid vehicle when running on steep inclined roads. On the other, when the hybrid vehicle is decelerating, the generator motor converts the kinetic energy of the vehicle into electric power to charge the battery. To put it differently, the kinetic energy is utilized effectively to regenerate energy. In addition, if the charged condition of the battery has lowered, the charged condition is improved by operating the generator motor through the internal combustion engine so as to generate electric power when the hybrid vehicle is under the running condition. As described herein, the generator motor acts as an electric motor as well as a power generator. However, the generator motor might be operated uselessly under certain conditions, although it is not necessarily working always.

If the generator motor that is not generating power is connected with a power transmission route and is operated in vain, the power loss has increased by that extent. Accordingly, the hybrid vehicle might possibly exhibit a declined fuel consumption. For example, a large number of rotary-magnet type generator motors have been used heavily for hybrid vehicle. A rotary-magnet type generator motor comprises a permanent magnet that is embedded in the rotor. When the rotor is operated, an induced electromotive force generates in a coil on the side of the stator. Although problems that arise from the resulting induced electromotive force are relieved by means of the so-called "weak field or field-weakening control" in which an opposite-direction or reverse voltage is applied to the coil from the outside, electric power has been consumed by such a voltage application to result in declining the hybrid vehicle's mileage. Moreover, when the hybrid vehicle is accelerating or decelerating, it is necessary to operate the generator motor extra by inertia that the generator motor possesses intrinsically. Consequently, it is less likely to control the generator motor in the acceleration or deceleration phase than in the case where the generator motor is disconnected from the power transmission route. The applicant of the present application proposed an example of measures for solving the problems in a power transmission apparatus that is disclosed in WO/2009/051143. The disclosed power transmission apparatus comprises a first power interrupting mechanism, and a second power interrupting mechanism. The first power interrupting mechanism is disposed between the input shaft of a staged change-speed mechanism and the rotor of a rotary electric machine. The second power interrupting mechanism is disposed between the rotor and an output shaft of the rotary electric machine that eventually transmits a power down to the driving wheels of a hybrid vehicle. The setting makes it possible to disconnect the rotary electric machine's rotor from a power transmission route.

Using the power transmission apparatus disclosed in WO/2009/051143 makes it possible to disconnect a rotor of the rotary electric machine (or generator motor) from a power transmission route to reduce the power loss that arises from operating the rotary electric machine wastefully. Note however that using the power transmission apparatus might inhibit the rotary electric machine from regenerating energy from the kinetic energy of a hybrid vehicle. That is, when disconnecting a generator motor from a power transmission route, it is possible to reduce the power loss, but the chance of regenerating energy might be lost. On the contrary, when connecting the generator motor with the power transmission route, the power loss might increase, but it is possible to get an opportunity of regenerating energy. Therefore, after starting the hybrid vehicle by driving with the generator motor, it is preferable to disconnect the generator motor from the power transmission route when keeping the hybrid vehicle running roughly at a constant speed sustainably under ordinary running condition. On the other hand, it is preferable to connect the generator motor with the power transmission route when accelerating and decelerating the hybrid vehicle repeatedly. However, it is difficult to judge whether or not the hybrid vehicle would keep running continuously later on under ordinary running condition, because the judgment is made case by case depending on road conditions and traffic conditions.

Moreover, the judgment whether the generator motor is disconnected from or connected with the power transmission route depends on the charged condition of a battery that the hybrid vehicle has on board. That is, when the battery is charged insufficiently, it would be less important to reduce the power loss than to improve the charged condition by means of connecting the generator motor with the power transmission route and then operating the generator motor through the internal combustion engine or having the generator motor regenerate energy at the time deceleration. In addition, when the battery attains the full charge in terms of the charged condition, it is preferable to disconnect the generator motor from the power transmission route in order to prevent the generator motor from overcharging the battery.

### SUMMARY OF THE INVENTION

The present invention has been developed in view of the aforementioned circumstances. It is therefore an object of the present invention to provide a novel power transmission mechanism for hybrid vehicle that solves above-described drawbacks. Hence, not only a power transmission mechanism for hybrid vehicle according to the present invention enables a hybrid vehicle to show an upgraded mileage or fuel consumption by reducing the power loss, which results from operating a generator motor uselessly in running the hybrid vehicle under ordinary condition, as well as by utilizing regenerative energy effectively; but also the present power transmission mechanism exhibits upgraded controllability at the time of acceleration, and at the time of deceleration.

A power transmission mechanism for hybrid vehicle according to the present invention comprises:
an internal combustion engine for outputting a power;
a generator motor for carrying out electric power generation when a power is inputted, and outputting a power when not generating an electric power;
a controller for selecting and then controlling the internal combustion engine and the generator motor as a driving source for running;
a power interrupter for connecting the generator motor with a power transmission route for transmitting the power and then disconnecting the generator motor from the power transmission route, or vice versa, intermittently; and
the controller controlling the power interrupter wherein the power interrupter is activated and then deactivated, or vice versa, intermittently, with reference to at least one piece of information being selected from the group consisting of information on road conditions, information on traffic conditions and information on vehicular conditions.

Moreover, it is preferable that: the controller can obtain the information on road conditions from an on-board car navigation device; and the controller can control the power interrupter so that the power interrupter disconnects the generator motor from the power transmission route when such an ordinary running requirement is met that a road on which a hybrid vehicle is running is an expressway or a road being intended exclusively for automobile, or that the road is a common road along which traffic signals are present so less that it is possible to expect to keep the hybrid vehicle running ordinarily. Note herein that the term, "ordinary running requirement," implies that a hybrid vehicle can be traveled at a given constant speed without being interfered or stopped by traffic signals, traffic congestions or traffic accidents, for instance.

In addition, it is preferable that: the controller can further obtain the information on traffic conditions from the on-board car navigation device; and the controller can control the power interrupter so that the power interrupter connects the generator motor with the power transmission route when the controller anticipates that it is difficult to keep the hybrid vehicle running ordinarily because a traffic condition is not favorable ahead even if the ordinary running requirement is met.

Note that it is even allowable that: the controller can control the power interrupter so that the power interrupter connects the generator motor with the power transmission route when the road on which the hybrid vehicle is running is an expressway or a road being intended exclusively for automobile, and when a running speed of the hybrid vehicle is decreased less than a designated minimum speed.

Moreover, it is preferable that: the controller can retrieve a value of charged condition, which specifies a charged condition of an on-board battery that the generator motor charges, as the information on vehicular conditions; and the controller can control the power interrupter so that the power interrupter connects the generator motor with the power transmission route when the value of charged condition is equal to or less than a predetermined value for specifying insufficient charging; and the controller can control the power interrupter so that the power interrupter disconnects the generator motor from the power transmission route when the value of charged condition is equal to or more than another predetermined value for specifying full charging.

Note that it is even permissible that: the generator motor can comprise a rotor that includes a permanent magnet; and the power interrupter can connect the rotor with the power transmission route and can then disconnect the rotor from the power transmission route, or vice versa, intermittently.

In addition, it is preferable that the power interrupter can be disposed at one location at least, location which is selected from the group consisting of a position between the internal combustion engine and a change-speed device in the power transmission route and a downstream side being present more downstream than the change-speed device is present in the power transmission route, in order to connect the generator motor with the power transmission route and then disconnect the generator motor from the power transmission route, or vice versa, intermittently.

The power transmission mechanism for hybrid vehicle according to the present invention comprises the controller, and the power interrupter. The controller refers to at least one piece of information that is selected from the group consisting of information on road conditions, information on traffic conditions and information on vehicular conditions. Then, the controller controls the power interrupter so that the power interrupter is activated and then deactivated, or vice versa, intermittently, thereby connecting the generator motor with the power transmission route and then disconnecting the generator motor from the power transmission route, or vice versa, intermittently. Accordingly, the controller can set up an adequate condition, and can control the generator motor so that the generator motor is connected with and then disconnected from the power transmission route, or vice versa, intermittently, under the appropriate condition. Consequently, it is possible to reduce the power loss, which occurs when the generator motor is operated uselessly, by means of disconnecting the generator motor from the power transmission route under such circumstances; and it is possible to utilize regenerative energy effectively by means of connecting the generator motor with the power transmission route when a hybrid vehicle is decelerating. Therefore, it is possible to upgrade the mileage or fuel consumption of hybrid vehicle as a whole. Moreover, when the generator motor is disconnected from the power transmission route, the overall inertia of the present power transmission mechanism decreases by the inertia of the generator motor for a time period of the disconnection. As a result, it is possible for the present power transmission mechanism to exhibit upgraded controllability at the time of acceleration, and at the time of deceleration.

Moreover, the preferable mode, in which the controller obtains the information on road conditions from an on-board car navigation device and then controls the power interrupter so as to disconnect the generator motor from the power transmission route when the ordinary running requirement is met, makes it possible to upgrade the mileage of hybrid vehicle more, because the generator motor is not operated in vain when it is possible to expect that a hybrid vehicle will keep running ordinarily at a constant speed roughly.

In addition, the preferable mode, in which the controller further obtains the information on traffic conditions from the on-board car navigation device and then controls the power interrupter so as to connect the generator motor with the power transmission route when the controller anticipates that it is difficult to keep a hybrid vehicle running ordinarily because a traffic condition is not favorable ahead even if the ordinary running requirement is met, makes it possible to upgrade the fuel consumption of hybrid vehicle much more, because regenerative energy is made use of more effectively at the time of deceleration.

Moreover, the allowable mode, in which the controller controls the power interrupter so that the power interrupter connects the generator motor with the power transmission route when the road on which the hybrid vehicle is running is an expressway or a road being intended exclusively for automobile, and when a running speed of the hybrid vehicle is decreased less than a designated minimum speed , makes it possible to reliably anticipate that it is difficult to run a hybrid vehicle ordinarily. Therefore, the allowable mode enables the hybrid vehicle to exhibit much better mileage, because the hybrid vehicle utilizes regenerative energy much more effectively at the time of deceleration.

In addition, the preferable mode, in which the controller retrieves a value of charged condition, which specifies a charged condition of an on-board battery that the generator motor charges, as the information on vehicular conditions; and the controller controls the power interrupter so that the power interrupter connects the generator motor with the power transmission route when the value of charged condition is equal to or less than a predetermined value for specifying insufficient charging; and the controller controls the power interrupter so that the power interrupter disconnects the generator motor from the power transmission route when the value of charged condition is equal to or more than another predetermined value for specifying full charging, not only makes it possible to preferentially improve the on-board battery in terms of the insufficiently charged condition, but also the preferable mode makes it possible to inhibit the fear of overcharging the on-board battery from arising. That is, the preferable mode can contribute to optimizing the on-board battery in terms of the charged condition.

Moreover, the permissible mode, in which the generator motor comprises a rotator that is made of a permanent magnet; and the power interrupter connects the rotor with the power transmission route and then disconnects the rotor from the power transmission route, or vice versa, intermittently, enables a rotary-magnet type generator motor to produce the above-described advantageous effects.

In addition, the preferable mode, in which the power interrupter is disposed at one location at least, location which is selected from the group consisting of a position between the internal combustion engine and a change-speed device in the power transmission route and a downstream side being present more downstream than the change-speed device is present in the power transmission route, in order to connect the generator motor with the power transmission route and then disconnect the generator motor from the power transmission route, or vice versa, intermittently, makes it possible to apply the power transmission mechanism according to the present invention to power transmission routes with various constructions.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is a block diagram for illustrating a power transmission mechanism for hybrid vehicle according to First Embodiment of the present invention.

Fig. 2 is a flow chart for illustrating how a hybrid electronic control unit (hereinafter abbreviated to as "hybrid ECU") controls the power transmission mechanism according to the First Embodiment that is represented in Fig. 1.

Fig. 3 is a block diagram for illustrating a power transmission mechanism for hybrid vehicle according to Second Embodiment of the present invention, Second Embodiment which comprises a power interrupter that is arranged on a more downstream side than a change-speed device is present.

Fig. 4 is a block diagram for illustrating a power transmission mechanism according to Third Embodiment of the present invention, Third Embodiment which comprises two power interrupters.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

### (First Embodiment)

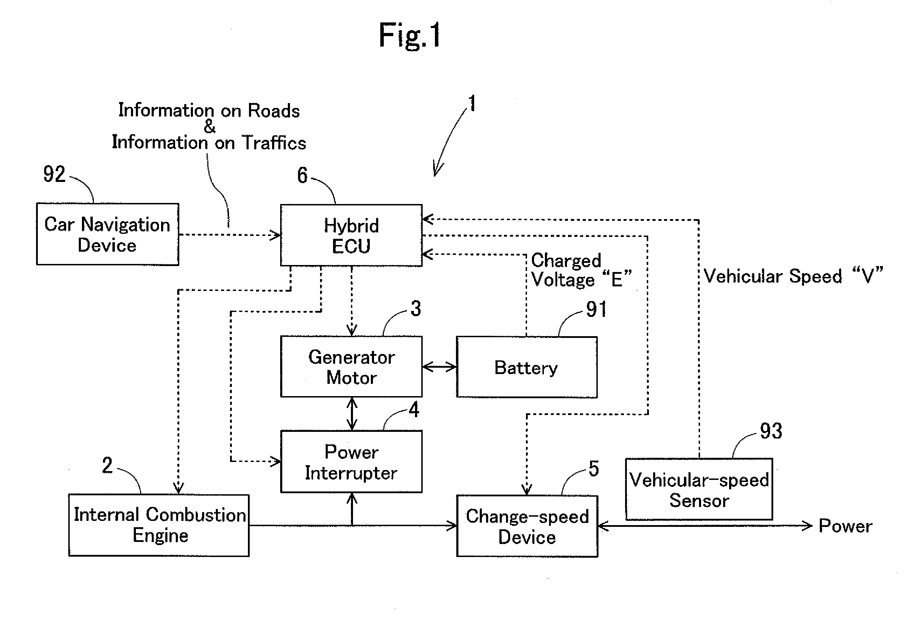

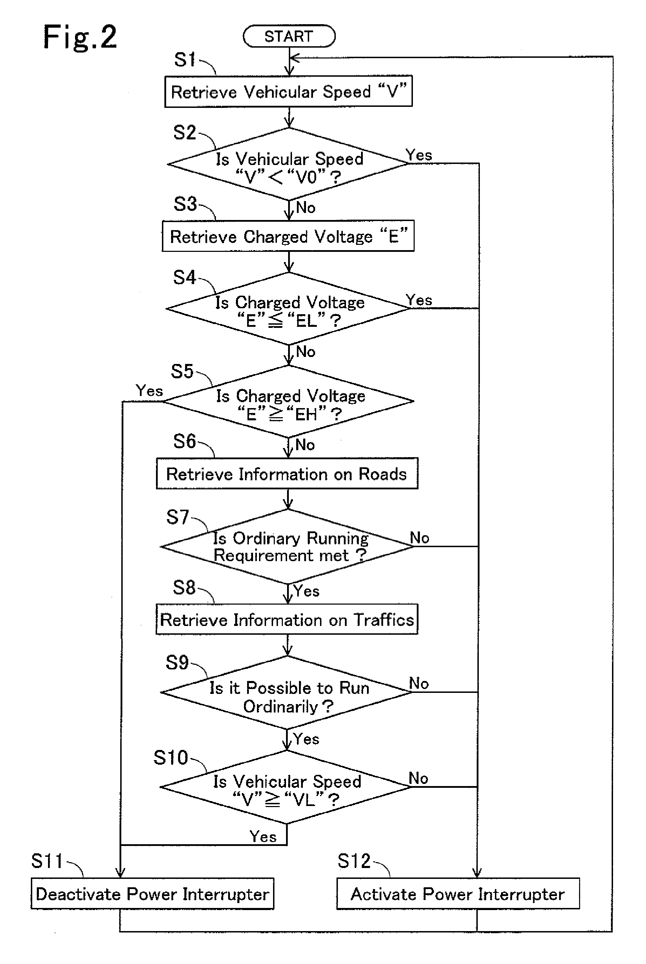

One of the modes for executing the present invention will be described with reference to Figs. 1 and 2. A power transmission mechanism 1 for hybrid vehicle according to First Embodiment of the present invention is illustrated with a block diagram in Fig. 1. In the drawing, the arrows designated with the continuous line specify the flows of power or energy, and the arrows designated with the dashed line specify the flows of information or control. The power transmission mechanism 1 according to the First Embodiment comprises an internal combustion engine 2, a generator motor 3, a power interrupter 4, a change-speed device 5, and a hybrid ECU 6.

The internal combustion engine 2 makes a driving source for running hybrid vehicle, and outputs a power from the crankshaft. The outputted power is inputted into the change-speed device 5 by way of a clutch (not shown). The generator motor 3 has an output shaft that is coupled to a power transmission route by way of the power interrupter 4. The generator motor 3 is connected with a battery 91 by way of an inverter (not shown) to output an electric energy to the battery 91. On certain occasions where a power is inputted into the generator motor 3 from the internal engine 2, or from the driving wheels of a hybrid vehicle, the generator motor 3 acts as a generator, thereby charging the battery 91. Moreover, on the other occasions where a driving electric power is inputted into the generator motor 3 from the battery 91, the generator motor 3 acts as an electric motor to make another driving source for hybrid vehicle, thereby outputting a power to the power transmission route. The power interrupter 4 connects and then disconnects between the output shaft of the generator motor 3 and the internal combustion engine 2 and change-speed device 5 in the power transmission route. As for the power interrupter 4, it is possible to use general clutches or synchronizers. The change-speed device 5 converts the revolving speed of a power, which is outputted from the internal combustion engine 2 and/or the generator motor 3, to the other revolving speed, and then outputs the resultant converted power. The power being outputted from the change-speed device 5 is transmitted eventually to the driving wheels of a hybrid vehicle, thereby running the hybrid vehicle.

Note that constructions of the internal combustion engine 2, generator motor 3, power interrupter 4 and change-speed device 5, and method for controlling them are not limited especially in the First Embodiment of the present invention. That is, it is possible to suitably combine various apparatuses and instruments, which have been known publicly, to make the internal combustion engine 2, generator motor 3, power interrupter 4 and change-speed device 5 to use.

The hybrid ECU 6 means an ECU for hybrid vehicle, and is equivalent to the claimed controller that controls the internal combustion engine 2 and/or the generator motor 3 selectively to make a driving source for running hybrid vehicle. The hybrid ECU 6 not only controls the power interrupter 4 so as to turn it on and then turn it off, or vice versa, intermittently, but also controls the change-speed device 5 so as to carry out change-speed operations. As for the hybrid ECU 6, it is possible to use electronic control devices that comprise a computing section, a memorizing section, an inputting section and an outputting section, and which are operated via software programs. Moreover, in order to constitute the hybrid ECU 6, it is allowable to combine a plurality of minor ECUs, which are adapted for controlling the internal combustion engine 2, generator motor 3, power interrupter 4 and change-speed device 5 individually, with a major ECU, which is adapted for controlling the constituent elements of vehicle or administering the vehicle as a whole while exchanging a great number of pieces of information with each the minor ECUs. In addition, the hybrid ECU 6 retrieves the following bits of information from an on-board navigation device 92: bits of information on road conditions (hereinafter abbreviated to as "road information"); and bits of information on traffic conditions (hereinafter abbreviated to as "traffic information). The road information is information that specifies characteristics of roads on which a vehicle is running. The road information involves the following pieces of information: (a) a road on which a vehicle is running is whether an expressway, or a road being intended exclusively for automobile, or even a common or general road; (b) a minimum speed "VL" on an expressway or a rod being intended exclusively for automobile; and (c) dispositions or arrangements of traffic signals on a common or general road, and the existence or nonexistence of curved roads and gradient or inclined roads ahead.

Note that, in general, the car navigation device 92 retains a part of the road information and traffic information in a memory that is provided in its own interior and acquires another part of them from the outside by means of wireless communication.

The hybrid ECU 6 judges whether or not an ordinary running requirement is met based on the traffic information. Specifically, the hybrid ECU 6 judges that an ordinary running requirement is met under the following circumstances: a hybrid vehicle is running on an expressway or a road being intended exclusively for automobile; and a hybrid vehicle is running on a common or general road but traffic signals are present so less that it is possible to expect that the hybrid vehicle can be kept running ordinarily; for instance. Note that, when a hybrid vehicle is running on a common or general road, it is also allowable that the hybrid ECU 6 can judge that the ordinary running requirement is not met when curved roads and/or gradient or inclined roads come ahead one after another, in addition to the provision or disposition of traffic signals along the common or general road.

Moreover, the traffic information is information that indicates traffic conditions along a road on which a hybrid vehicle is running currently. Although the above-described road information can be determined unambiguously by a location where a hybrid vehicle is running now, the traffic information can only be settled case by case because it is variable with time even when the running location is found out. The traffic information involves the following bits of information: traffic congestions; traffic accidents; road constructions; climates; and temporary speed-limit regulations and/or change-lane regulations that result from these factors. The hybrid ECU 6 anticipates whether it is possible or difficult to actually run a hybrid vehicle ordinarily when the ordinary running requirement is met. For example, the hybrid ECU 6 judges that a traffic condition ahead is not satisfactory so that it is difficult to run a hybrid vehicle ordinarily under the following circumstances: in the case of traffic congestions that occur ahead; and in the case of temporary speed-limit regulations ahead that are carried out because of traffic accidents, road constructions or climates, and so on.

In addition, the hybrid ECU 6 is made so that it retrieves information on a charged voltage "E" from the battery 91 as well as information on a vehicular speed "V" (or vehicle-running speed "V") from a vehicle-speed sensor 93, as pieces of the claimed information on vehicular conditions (being abbreviated to as "vehicular information" hereinafter). Note that the vehicle-speed sensor 93 is disposed in a power transmission route. The charged voltage "E" makes a value of the claimed charged condition for specifying a charged condition of the battery 91. When the charged voltage "E" is present between a prescribed or rated voltage "EL" for insufficient charging and another prescribed or rated voltage "EH" for full charging (i.e., "EL" < "E" < "EH"), the battery 91 is put in a proper charged condition. Therefore, it is preferable to charge the battery 91 as much as possible when the charged voltage "E" is equal to or less than the insufficient-charging voltage "EL." Meanwhile, it is preferable to inhibit the battery 91 from being overcharged when the charged voltage "E" is equal to or more than the full-charging voltage "EH."

The hybrid ECU 6 obtains the above-described road information, traffic information and vehicular information to control the power interrupter 4. Then, the hybrid ECU 6 activates the power interrupter 4 and then deactivates it, or vice versa, intermittently. A flow chart for illustrating how the hybrid ECU 6 controls the power interrupter 4 is represented in Fig. 2. As shown in the diagram, when the hybrid ECU 6 starts operating, it first of all retrieves a vehicular speed "V" at Step S1. At Step S2, the hybrid ECU 6 compares the vehicular speed "V" with a predetermined creeping speed "V0," and then judges whether a hybrid vehicle is started moving or it is running. The creeping speed "V0" is a speed that makes a target upon switching the driving source for running hybrid vehicle from the generator motor 3 to the internal combustion engine 2 at the time of starting a hybrid vehicle moving. When the vehicular speed "V" is slower than the creeping speed "V0," the hybrid ECU 6 moves immediately to Step S12 because the hybrid vehicle is inching or is started moving. Then, the hybrid ECU 6 controls the power interrupter 4 so as to connect the generator motor 3 with a power transmission route, thereby enabling the generator motor 6 to drive the hybrid vehicle. Note herein that the term, "creeping speed," implies that the hybrid vehicle is running at a slow or very slow speed that is slower or much slower than a designated regulatory speed, or that does not reach the designated regulatory speed.

When the hybrid ECU 6 judges at Step S2 that the vehicular speed "V" is equal to or faster than the creeping speed "V," the hybrid vehicle is running. Accordingly, the hybrid ECU 6 moves to Step S3 to retrieve information on the charged battery "E" from the battery 91. Then, the hybrid ECU6 compares the charged voltage "E" with the insufficient-charging voltage "EL" at Step S4. When the charged voltage "E" is equal to or less than the insufficient-charging voltage "EL," the hybrid ECU 6 moves to Step S12. Consequently, the hybrid ECU 6 controls the power interrupter 4 so as to connect the generator motor 3 with the power transmission route, thereby enabling the generator motor 3 to charge the battery 91 as much as possible for improving the charged condition of the battery 91. Meanwhile, when the charged voltage "E" is greater than the insufficient-charging voltage "EL," the hybrid ECU 6 moves to Step S5 to compare the charged voltage "E" with the full-charging voltage "EH." When the charged voltage "E" is equal to or greater than the full-charging voltage "EH," the hybrid ECU 6 moves to Step S11. As a result, the hybrid ECU 6 controls the power interrupter 4 so as to disconnect the generator motor 3 from the power transmission route, thereby inhibiting the battery 91 from being overcharged more than being charged currently. When the charged voltage "E" is smaller than the full-charging voltage "EH," the hybrid ECU 6 moves to Step S6 because the battery 91 is charged properly.

At Step S6, the hybrid ECU 6 retrieves the road information from the car navigation device 92. Then, the hybrid ECU 6 moves to Step S7 to judge whether or not the ordinary running requirement is met. When the ordinary running requirement is not met, the hybrid ECU 6 moves to Step S12 to turn on the power interrupter 4, thereby connecting the generator motor 3 with the power transmission route. Meanwhile, when the ordinary running requirement is met, the hybrid ECU 6 moves to Step S8 to retrieve the traffic information from the car navigation device 92. Subsequently, at Step S9, the hybrid ECU 6 anticipates whether it is possible or difficult to actually run the hybrid vehicle ordinarily. When the hybrid ECU 6 anticipates that it is difficult to do so, the hybrid ECU 6 moves to Step S12 to turn on the power interrupter 4, thereby connecting the generator motor 3 with the power transmission route. Meanwhile, when the hybrid ECU 6 judges that it is possible to do so, it moves to Step S10. At Step S10, the hybrid ECU 6 compares the vehicular speed "V" with a minimum speed "VL," if the minimum speed "VL" is designated for an expressway or a road being intended exclusively for automobile on which the hybrid vehicle is running at the moment. When the vehicular speed "V" is equal to or faster than the minimum speed "VL," the hybrid ECU 6 moves to Step S11. On the contrary, when the vehicular speed "V" is slower than the minimum speed "VL," the hybrid ECU 6 moves to Step S12. Note that the hybrid ECU 6 moves to Step S11 unconditionally if the minimum speed "VL" is not designated for that expressway or exclusive road.

As described above, the hybrid ECU 6 moves to either Step S11 or Step S12. At Step S11, the hybrid ECU 6 controls the power interrupter 4 so that it is turned off, thereby disconnecting the generator motor 3 form the power transmission route. The hybrid ECU 6 makes the control over the power interrupter 4 to deactivate it under the circumstances that are categorized into the following instances: (a) it is needed to prevent the battery 91 from being overcharged because the charged voltage "E" is the full-charging voltage "EH" or more; (b) it is possible to anticipate that a hybrid vehicle can actually be run ordinarily because the ordinary running requirement is met, and additionally the vehicular speed "V" is the minimum speed "VL" or faster. On the other hand, at Step S12, the hybrid ECU 6 controls the power interrupter 4 so that it is turned on, thereby connecting the generator motor 3 with the power transmission route. The hybrid ECU 6 makes the control over the power interrupter 4 to activate it under the circumstances that are categorized into the following instances: (c) at the time of starting a hybrid vehicle; (d) it is desirable to carry out charging the battery 91 as much as possible because the charged voltage "E" is the insufficient-charging voltage "EL" or less; and (e) the battery 91 is charged properly but it is difficult to run a hybrid vehicle ordinarily. The hybrid ECU 6 completes one cycle of control over the power interrupter 4 after it has performed the given action at Step S11 or Step S12, and then returns to Step S1.

Note that the hybrid ECU 6 processes actions at Steps S1 and S2 that set priority on starting a hybrid vehicle moving by means of driving with the generator motor 3. Moreover, the hybrid ECU 6 processes actions at Steps S3 through S5 that prioritize to improve the battery 91 in the charged condition. In addition, the hybrid ECU 6 processes actions at Steps S6 through S10 that upgrade the fuel consumption of a hybrid vehicle under the circumstances where the battery 91 is kept to be charged properly.

The power transmission mechanism 1 according to the First Embodiment comprises the hybrid ECU 6, and the power interrupter 4. The hybrid ECU6 not only obtains the pieces of information on road conditions and traffic conditions from the car navigation device 92, but also controls the power interrupter 4 to turn it on and then turn it off, or vice versa, intermittently, while making reference to the charged voltage "E" of the battery 91 and the vehicular speed V" of a hybrid vehicle. Then, the power interrupter 4 connects the generator motor 3 with the power transmission route and then disconnects the generator motor 3 from the power transmission route, or vice versa, intermittently. Therefore, the power transmission mechanism 1 according to the First Embodiment can upgrade a hybrid vehicle in terms of the overall mileage or fuel consumption because of the following operations: it is possible to reduce the power loss that results from the generator motor 3 being operated uselessly, because the power interrupter 4 disconnects the generator motor 3 from the power transmission route when it is possible to expect that the hybrid vehicle keeps running ordinarily at a constant speed roughly; and it is possible to effectively utilize the regenerative energy, which the generator motor 3 produces, at the time of decelerating the hybrid vehicle, because the power interrupter 4 connects the generator motor 3 with the power transmission route when it is anticipated that it is difficult to run the hybrid vehicle ordinarily. Moreover, the power transmission mechanism 1 according to the First Embodiment exhibits upgraded controllability at the time of accelerating the hybrid vehicle, and at the time of decelerating it, because its own inertia decreases by the inherent inertia of the generator motor 3 for a period of time when the generator motor 3 is being disconnected from the power transmission route.

In addition, the power transmission mechanism 1 according to the First Embodiment can contribute to making the charged condition of the battery 91 proper, because the hybrid ECU 6 controls the power generator motor 3 how it charges the battery 91 through the control over the power interrupter 4 that is activated and then deactivated, or vice versa, intermittently while consulting the charged battery "E" of the battery 91.

### (Second and Third Embodiments)

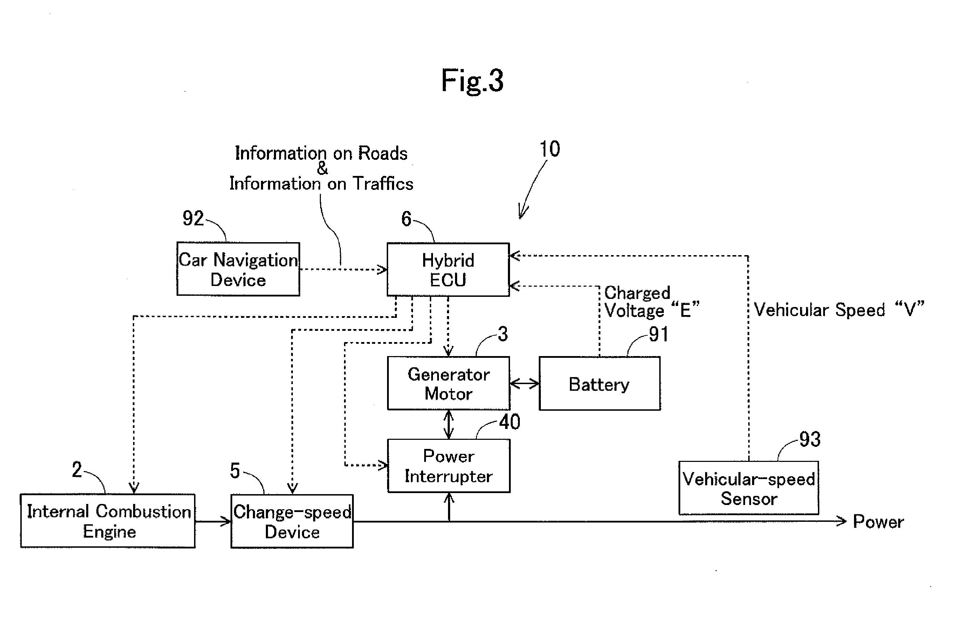

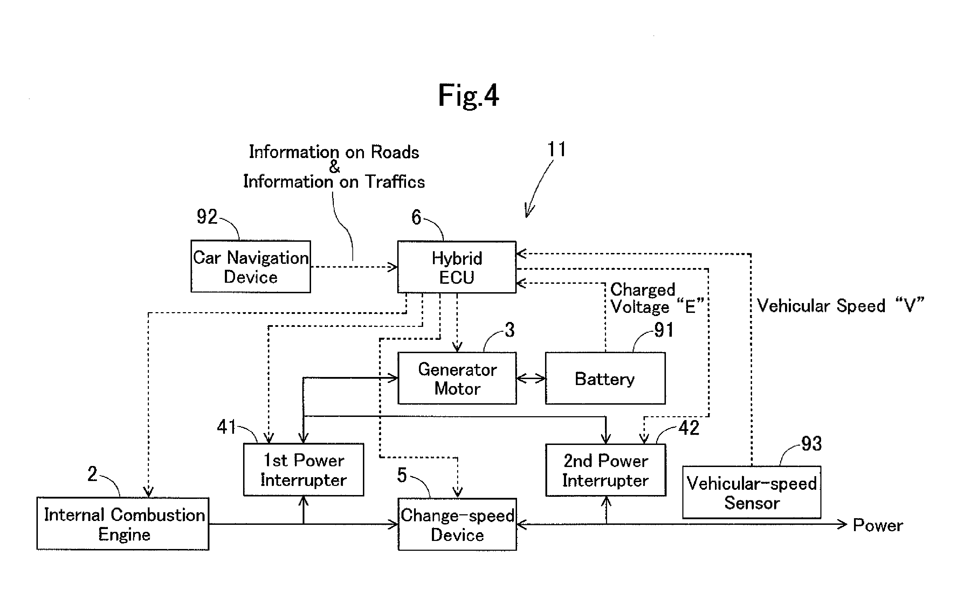

Hereinafter, power transmission mechanisms for hybrid vehicle according to other embodiments of the present invention, namely, Second and Third Embodiments, will be described with reference to Figs. 3 and 4. The power transmission mechanisms according to the Second and Third Embodiments are distinct from the above-described power transmission mechanism 1 according to the First Embodiment in terms of the dispositions of the power interrupter 4 in a hybrid vehicle. A power transmission mechanism 10 according to the Second Embodiment is illustrated with a block diagram in Fig. 3. Note that the power transmission mechanism 10 according the Second Embodiment comprises a power interrupter 40 that is arranged on a more downstream side than a change-speed device 5 is arranged. Moreover, a power transmission mechanism 11 according to the Third Embodiment is illustrated with a block diagram in Fig. 4. Note that the power transmission mechanism 11 according to the Third Embodiment comprises two power interrupters 41 and 42.

In the power transmission mechanism 10 according to the Second Embodiment, the power interrupter 40 connects the output shaft of the generator motor 3 with a downstream side in the power transmission route that is present more downstream than the change-speed device 5 is present therein, and then disconnects the output shaft from the downstream side, or vice versa, intermittently, as illustrated in Fig. 3. On the other hand, in the power transmission mechanism 11 according to the Third Embodiment, the two power interrupters 41 and 42 operate in the following manners, respectively, as shown in Fig. 4: the first power interrupter 41 connects the output shaft of the generator motor 3 with a position between the internal combustion engine 2 and the change-speed device 5 in the power transmission route, and then disconnects the output shaft from the position, or vice versa, intermittently; and the second power interrupter 42 connects the output shaft of the generator motor 3 with a downstream side in the power transmission route that is present more downstream than the change-speed device 5 is present therein, and then disconnects the output shaft from the downstream side, or vice versa, intermittently. Since the power transmission mechanisms 10 and 11 according to the Second and Third Embodiments function, operate and effect advantages in almost the same manner as the power transmission mechanism 1 according to the First Embodiment does, the functions, operations and advantageous effects will not be described herein.

The power transmission mechanisms 10 and 11 according to the Second and Third Embodiments exhibit higher power transmission efficiency when the generator motor 3 drives a hybrid vehicle, because the generator motor 3 can drive the driving wheels, not via the change-speed device 5, but directly.

Having now fully described the present invention, it will be apparent to one of ordinary skill in the art that many changes and modifications can be made thereto without departing from the spirit or scope of the present invention as set forth herein including the appended claims.

## Claims

1. A power transmission mechanism for hybrid vehicle, the power transmission mechanism comprising:
an internal combustion engine for outputting a power;
a generator motor for carrying out electric power generation when a power is inputted, and outputting a power when not generating an electric power;
a controller for selecting and then controlling the internal combustion engine and the generator motor as a driving source for running;
a power interrupter for connecting the generator motor with a power transmission route for transmitting the power and then disconnecting the generator motor from the power transmission route, or vice versa, intermittently; and
the controller controlling the power interrupter wherein the power interrupter is activated and then deactivated, or vice versa, intermittently, with reference to at least one piece of information being selected from the group consisting of information on road conditions, information on traffic conditions and information on vehicular conditions.

2. The power transmission mechanism according to claim 1, wherein:
the controller obtains the information on road conditions from an on-board car navigation device; and
the controller controls the power interrupter so that the power interrupter disconnects the generator motor from the power transmission route when such an ordinary running requirement is met that a road on which a hybrid vehicle is running is an expressway or a road being intended exclusively for automobile, or that the road is a common road along which traffic signals are present so less that it is possible to expect to keep the hybrid vehicle running ordinarily.

3. The power transmission mechanism according to claim 2, wherein:
the controller further obtains the information on traffic conditions from the on-board car navigation device; and
the controller controls the power interrupter so that the power interrupter connects the generator motor with the power transmission route when the controller anticipates that it is difficult to keep the hybrid vehicle running ordinarily because a traffic condition is not favorable ahead even if the ordinary running requirement is met.

4. The power transmission mechanism according to claim 2, wherein the controller controls the power interrupter so that the power interrupter connects the generator motor with the power transmission route when the road on which the hybrid vehicle is running is an expressway or a road being intended exclusively for automobile, and when a running speed of the hybrid vehicle is decreased less than a designated minimum speed.

5. The power transmission mechanism according to claim 1, wherein:
the controller retrieves a value of charged condition, which specifies a charged condition of an on-board battery that the generator motor charges, as the information on vehicular conditions; and
the controller controls the power interrupter so that the power interrupter connects the generator motor with the power transmission route when the value of charged condition is equal to or less than a predetermined value for specifying insufficient charging; and
the controller controls the power interrupter so that the power interrupter disconnects the generator motor from the power transmission route when the value of charged condition is equal to or more than another predetermined value for specifying full charging.

6. The power transmission mechanism according to claim 1, wherein:
the generator motor comprises a rotor that includes a permanent magnet; and
the power interrupter connects the rotor with the power transmission route and then disconnects the rotor from the power transmission route, or vice versa, intermittently.

7. The power transmission mechanism according to claim 1, wherein the power interrupter is disposed at one location at least, location which is selected from the group consisting of a position between the internal combustion engine and a change-speed device in the power transmission route and a downstream side being present more downstream than the change-speed device is present in the power transmission route, in order to connect the generator motor with the power transmission route and then disconnect the generator motor from the power transmission route, or vice versa, intermittently.

8. A method of controlling hybrid vehicle, the method comprising the steps of:
retrieving a vehicular speed of a hybrid vehicle;
comparing the vehicular speed with a first predetermined speed specifying that the hybrid vehicle is creeping, wherein a power transmission mechanism is activated to connect a generator motor with a power transmission route if the vehicular speed is less than the first predetermined speed;
retrieving a charged voltage of a battery that the hybrid vehicle has on board if the vehicular speed is equal to or faster than the first predetermined speed;
comparing the charged voltage with a first predetermined voltage specifying that the battery is charged insufficiently, wherein the power transmission mechanism is activated to connect the generator motor with the power transmission route if the charged voltage is equal to or less than the first predetermined voltage;
comparing the charged voltage with a second predetermined voltage specifying that the battery is overcharged, wherein the power transmission mechanism is deactivated to disconnect the generator motor from the power transmission route if the charged voltage is equal to or greater than the second predetermined voltage;
retrieving information on road conditions if the charged voltage is less than the second predetermined voltage;
judging whether or not an ordinary running requirement is met, wherein the power transmission mechanism is activated to connect the generator motor with the power transmission route if the ordinary running requirement is not met;
retrieving information on traffic conditions if the ordinary running requirement is met;
judging whether or not it is possible to run the hybrid vehicle ordinarily, wherein the power transmission mechanism is activated to connect the generator motor with the power transmission route if it is not possible to do so;
comparing the vehicular speed with a second predetermined speed specifying that the hybrid vehicle is running ordinarily, wherein the power transmission mechanism is activated to connect the generator motor with the power transmission route if the vehicular speed is slower than the second predetermined speed, or the power transmission mechanism is deactivated to disconnect the generator motor from the power transmission route if the vehicular speed is equal to or faster than the second predetermined speed.
